# EUROPÄISCHE PATENTANMELDUNG

(11) **EP 1 176 054 A2**
(43) Veröffentlichungstag der Anmeldung: **30.01.2002**
(21) Anmeldenummer: 01116586.7
(22) Anmeldetag: 09.07.2001
(51) Int. Cl.: B60R 1/00, B60R 1/12

(54) **Überwachungseinrichtung für Kraftfahrzeuge**

(30) Priorität: 28.07.2000 DE 10036875; 06.10.2000 DE 20017165 U
(71) Anmelder: MEKRA Lang GmbH & Co. KG, 90765 Fürth (DE)
(72) Erfinder: Lang, Heinrich, 91465 Ergersheim (DE); Witzke, Michael, 91522 Ansbach (DE)
(74) Vertreter: Winter, Brandl, Fürniss, Hübner, Röss, Kaiser, Polte Partnerschaft

(57) **Zusammenfassung**

Es wird ein Rückspiegel für Fahrzeuge bereitgestellt, bei dem eine optische Anzeigeeinrichtung in Form eines Monitors angeordnet ist. Der Monitor ist mit einer Kamera verbunden, die einen Sichtbereich vor, neben und/oder hinter dem Fahrzeug erfaßt.

## Beschreibung

Die Erfindung betrifft eine Überwachungseinrichtung für Kraftfahrzeuge, insbesondere für Nutzfahrzeuge.

Bei Flugzeugen ist eine sogenannte Blackbox bekannt, die jeweils die Flugdaten zwischen einem Zeitpunkt in der Vergangenheit und der Gegenwart, z. B. der letzten halben Stunde, aufzeichnet. Zusätzlich sind auch sogenannte Voice-Recorder vorgesehen, mittels denen die Gespräch im Cockpit eines Flugzeuges für eine bestimmte Zeitdauer zwischen einem Zeitpunkt in der Vergangenheit und der Gegenwart aufgezeichnet werden. Damit diese Daten im Falle eines Absturzes ausgewertet werden können, sind sowohl Blackbox als auch Voice-Recorder stoß- und feuerfest in das Flugzeug installiert.

Es ist Aufgabe der vorliegenden Erfindung eine vergleichbare Überwachungseinrichtung für Kraftfahrzeuge, insbesondere für Nutzfahrzeuge zu schaffen.

Die Lösung dieser Aufgabe erfolgt durch die Merkmale des Anspruchs 1.

Durch eine in dem Fahrzeug installierte Kamera aufgenommene Bilder werden in einem Zeitintervall in der Vergangenheit ziwschen einem ersten Zeitpunkt t_{**1**} und einem zweiten Zeitpunkt t_{**2**} auf einer Bild- und Datenspeichereinheit gespeichert. Aufnahmen, die älter als t_{**1**} sind, werden wieder gelöscht bzw. überschrieben. Durch die in einer Bild- und Datenspeichereinrichtung aufgezeichneten und gespeicherten Bilder lassen sich Unfallhergänge einfacher und sicherer rekonstruieren und folglich auch die Schuldfrage bei einem Unfall leichter klären.

Zusätzlich können auch bestimmte Zeitintervalle in der Vergangenheit zusätzlich zu dem Zeitintervall in der jüngsten Vergangenheit abgespeichert werden. Bei zu geringem Abstand zum Vorderfahrzeug auf Autobahnen kann damit gegebenenfalls nachgewiesen werden, dass das Vorderfahrzeug mit zu geringem Abstand eingeschert ist.

Gemäß einer bevorzugten Ausführungsform der Erfindung wird automatisch immer eine bestimmte Zeitspanne zwischen Gegenwart und einem Zeitpunkt t_{**1**} in der Vergangenheit aufgezeichnet und gespeichert, während Aufnahmen, die älter als t_{**1**} sind wieder gelöscht bzw. überschrieben werden.

Gemäß einer weiteren bevorzugten Ausführungsform der Erfindung ist die Kamera in einem der Außenrückblickspiegel untergebracht. Damit kann der seitliche Bereich eines Kraftfahrzeugs mitüberwacht werden.

Alternativ ist die Kamera auch im Inneren des Kraftfahrzeugs, vorzugsweise im Bereich des Rückblickspiegels nach vorne schauend angeordnet. Durch die Anordnung der Kamera im Fahrzeuginneren ist eine wetterfeste Ausstattung der Kamera nicht notwendig.

Gemäß einer weiteren bevorzugten Ausführungsform der Erfindung werden in der Bild- und Datenspeichereinrichtung zu den Bildern Daten, wie Fahrzeugeschwindigkeit, Temperatur, Datum, usw. aufgezeichnet. Hierdurch läßt sich ebenfalls im Falle eines Unfalls der Unfallhergang leichter rekonstruieren und die Schuldfrage leichter lösen.

Gemäß einer weiteren bevorzugten Ausführungsform der Erfindung ist die Bild- und Datenspeichereinrichtung stoß- und feuerfest ausgebildet. Damit wird gewährleistet, dass auch bei schweren Unfällen, bei denen das Fahrzeug Feuer fängt oder bei dem starke Verformungen des Fahrzeugs erfolgen, die gespeicherten Daten für eine spätere Auswertung erhalten bleiben.

Gemäß einer weiteren bevorzugten Ausführungsform der Erfindung ist ein Monitor vorgesehen, auf dem das von der Kamera aufgenommene Bild wiedergegebe werden kann. Hierdurch läßt sich die Aufnahmequalität und der Blickwinkel der Kamera überwachen. Auch kann der Monitor hilfreich beim Rangieren des Fahrzeugs sein.

Durch die Anordnung des Monitors im Außensrückblickspiegel im Sichtbereich des Fahres, insbesondere im der Spiegelscheibe, kann beim Rückwärstfahren bzw. Rangieren durch Blick in den Rückblickspiegel gleichzeitig der rückwertige Bereich - im Spiegel - und der Bereich vor dem Fahrzeig - im Monitor - erfaßt werden.

Gemäß einer weiteren vorteilhaften Ausführungsform der Erfindung ist die Kamera schwenkbar ausgebildet, so daß sich unterschiedliche Bereiche rund um das Fahrzeug mit der Kamera erfassen und in dem Monitor anzeigen lassen. Beim Rückwärstsfahren kann so auch der Bereich hinter dem Fahrzeug im Monitor angezeigt werden, während bei normaler Vorwärtsfahrt der Bereich vor dem Fahrzeug von der Kamera erfaßt werden.

Gemäß einer weiteren vorteilhaften Ausgestaltung der Erfindung läßt sich die Blickrichtung der Kamera mittels einer im Zugriffsbereich des Fahrers angeordneten Bedienungseinrichtung verändern, so daß der Fahrer unterschiedliche Bereiche rund um das Fahrzeug im Monitor zur Anzeige bringen kann.

Gemäß einer weiteren vorteilhaften Ausgestaltung der Erfindung ist eine Mehrzahl von Kameras vorgesehen. Hierdurch lassen sich durch Umschalten zwischen den einzelnen Kameras ebenfalls unterschiedliche Bereich rund um das Fahrzeug im Monitor darstellen. Hierdurch erübrigt sich das Schwenken einer Kamera. Die jeweilige Kamera kann in der optimalen Position für den jeweils zu überwachenden Bereich angeordnet werden. Die Kamera für das Rückwärtsfahren ist sinnvollerweise an der Rückseite des Fahrzeugs anzubringen. In der Bild- und Datenspeichereinrichtung können die Bilder der jüngsten Vergangenheit wahlweise von einer oder von der Mehrzahl der Kameras abgespeichert werden.

Weitere Einzelheiten, Merkmale und Vorteile der Erfindung ergeben sich aus der nachfolgenden Beschreibung bevorzugter Ausführungsformen anhand der Zeichnung.

Es zeigt:
- Fig. 1: eine schematische Darstellung der Erfindung,
- Fig. 2: eine schematische Darstellung einer ersten bevorzugten Ausführungsform der Erfindung,
- Fig. 3: eine schematische Darstellung einer zweiten Ausführungsform mit der Kamera im Außenspiegel,
- Fig. 4: eine Ansicht des Außenspiegels der zweiten Ausführungsform mit Monitor in der Spiegelscheibe, und
- Fig. 5: eine schematische Darstellung einer dritten bevorzugten Ausführungsform mit einer Mehrzahl von Kameras.

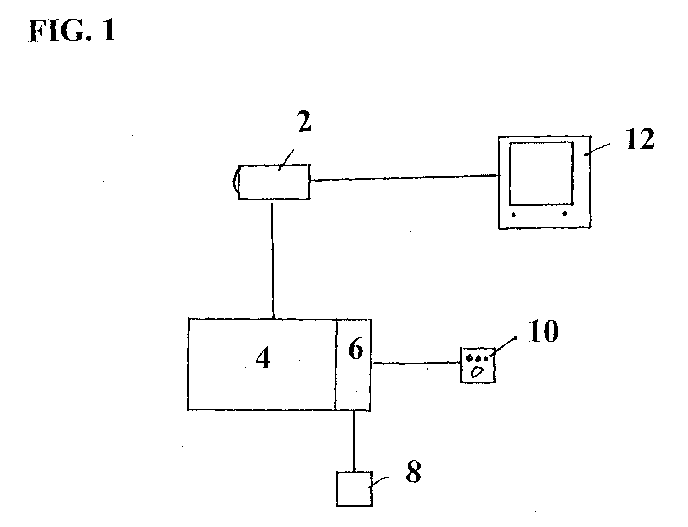

Fig. 1 zeigt schematische den grundsätzlichen Aufbau der Erfindung mit einer Kamera 2, die mit einer Bild- und Datenspeichereinrichtung 4 verbunden ist. Die Bild- und Datenspeichereinrichtung 4 umfaßt eine Steuereinrichtung 6, die die Aufzeichnung der von der Kamera 2 gelieferten Bilddaten steuert. Hierdurch wird in der einfachsten Ausführungsform gewährleistet, dass beispielsweise immer die letzten zehn Minuten aufgezeichnet und gespeichert werden. Mittels einer Schnittstelleneinrichtung 8 kann der Fahrzustand des Fahrzeugs erfaßt werden, so dass die Aufzeichnung bei Fahrzeugstillstand gestoppt wird. Über die Schnittstelleneinrichtung 8 können auch andere Fahrzeugzustandsdaten, wie Geschwindigkeit, Beschleinigung, Betätigung der Bremsen, Temperatur, Fahrbahnzustand, Feuchtigkeit, Datum, Uhrzeit, Helligkeit, usw., die von entsprechenden Sensoren oder von anderen im Fahrzeug vorhandenen Einrichtungen geliefert werden, in der Bild- und Datenspeichereinrichtung 4 zu den erfaßten Bilddaten gespeichert werden.

Die Kamera 2 kann im Fahrzeuginneren oder außen am Fahrzeug angeordnet sein und einen Blickwinkel in, vor, hinter oder seitlich von dem Fahrzeug erfassen. Die Bild- und Datenspeichereinrichtung 4 mit Steuereinrichtung 6 kann an beliebiger, geschützter Stelle im Fahrzeug angebracht werden. Mittels einer Bedienungseinrichtung 10 lassen sich die Zeitpunkte t_{**1**} und t_{**2**} festlegen zwischen denen die Bildaufzeichnung erfolgt. Mit der Bedienungseinrichtung 10 im Zusammenwirken mit der Steuereinrichtung 6 können auch während der Fahrt zusätzlich zu den immer gespeicherten letzten Minuten auch Zeitintervalle in der Vergangenheit zusätzlich abgespeichert werden. Damit ist z. B. möglich bei einer Autobahnfahrt nachzuweisen, dass ein vorausfahrendes Fahrzeug zu dicht eingeschert ist und dass dadurch ein zu geringer Abstand zum vorausfahrenden Fahrzeug entstanden ist.

Zusätzlich kann auch ein Monitor 12 mit der Kamera 2 und/oder der Bild- und Datenspeichereinrichtung 4 verbunden sein. Auf dem Monitor 12 kann das durch die Kamera 2 aufgenommene Bild dargestellt werden. Mit der Bedienungseinrichtung 10 kann auch der Blickwinkel der Kamera 2 verändert werden, falls die Kamera 2 verschwenkbar ausgeführt ist. Bei der Kamera 2 handelt es ich vorzugsweise um eine CCD-Kamera und bei dem Monitor 12 kann ein LCD-Schirm verwendet werden.

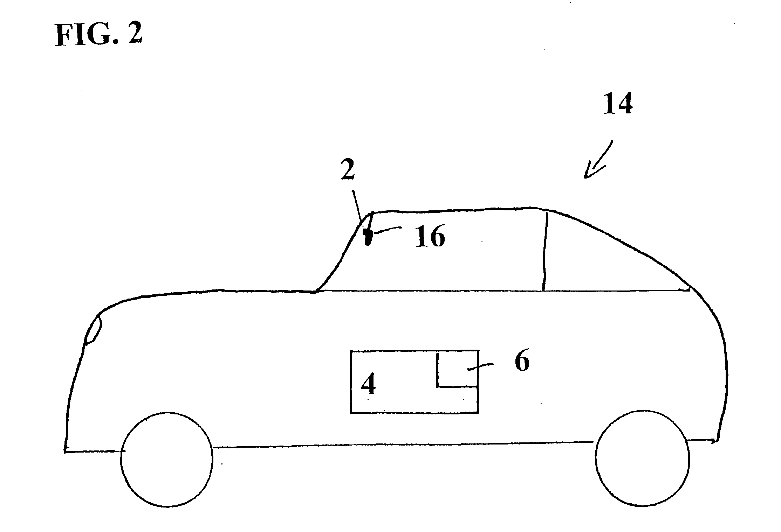

Fig. 2 zeigt schematisch eine erste einfache Ausführungsform der Erfindung in einem Personenkraftwagens 14. Die Kamera 2 ist im Inneren des Personenkraftwagens 14 im Bereich eines Innenrückblickspiegels 16 in Fahrtrichtung schauend angeordnet. Die Bild- und Datenspeichereinrichtung 4 mit Steuereinrichtung 6 ist an beliebiger geschützter Stelle im Pkw 14 angeordnet.

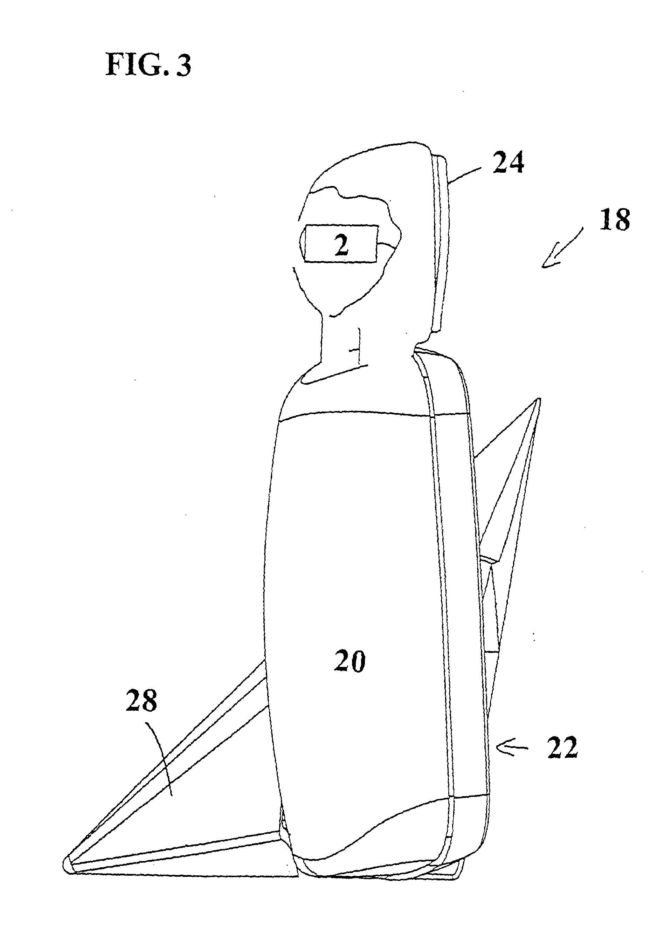

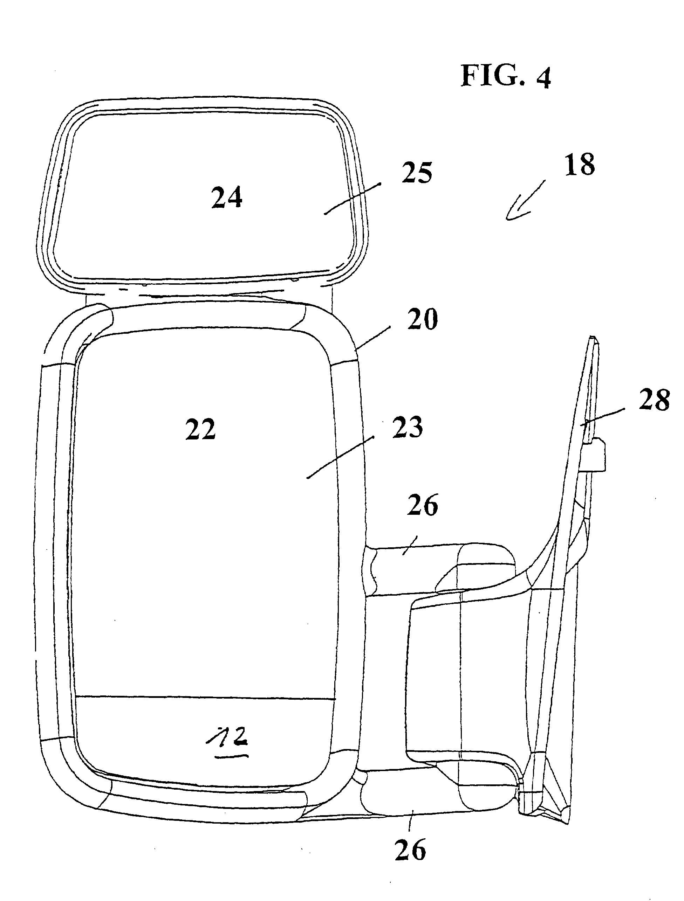

Die Figuren 3 und 4 zeigen die Anordnung der Kamera 2 und des Monitors 12 in einem Außenrückblickspiegel 18 eines nicht näher dargestellten Nutzfahrzeugs. Der Außenrückblickspiegel 18 umfaßt ein Spiegelgehäuse 20 mit einem unteren Hauptspiegel 22 mit Spiegelscheibe 23 und einem oberen Zusatzsspiegel 24 mit Spiegelscheibe 25. Mittels zwei Haltearmen 26 sind die beiden Spiegel 22 und 24 und das Spiegelgehäuse 20 an einem Spiegelfuß 28 befestigt, der wiederum an dem nicht näher dargestellten Nutzfahrzeug montiert ist. Die Kamera 2 ist hinter dem Zusatzspiegel 24 im Inneren des Spiegelgehäuses 20 angeordnet. Durch eine Kameraöffnung 30 im Spiegelgäuse 20 erfaßt die Kamera 2 einen Blickwinkel in Fahrtrichtung des Nutzfahrzeugs. Die Bild- und Datenspeichereinrichtung - nicht dargestellt - ist an geeigneter Stelle im Nutzfahrzeug untergebracht. Der Monitor 12 ist bei dieser Ausführungsform in den unteren Bereich des Hauptspiegels 22 in die Spiegelscheibe 24 integeriert. Durch die Anordnung des Monitors 12 in der Spiegelscheibe 24 kann der Fahrer mit einem Blick der rückwärtigen Bereich - im Haupt- und Zusatzspiegel 22 und 24 - und den Bereich vor dem Nutzfahrzeug - im Monitor 12 - beobachten.

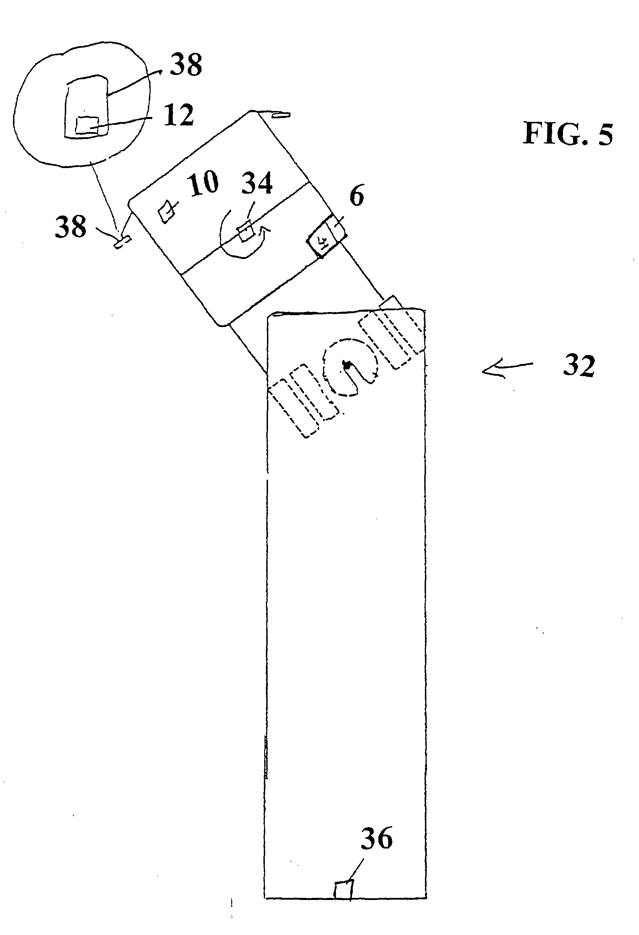

Fig. 5 zeigt schematisch eine zweite Ausführungsform der Erfindung, bei der in einem Sattelzug 32 eine vordere Kamera 34 schwenkbar auf dem Dach der Zugmaschine angeordnet ist. Eine zweite, rückwärtige Kamera 36 ist im rückwärtigen Bereich des Anhängers entgegen der Fahrtrichtung blickend angeordnet. In einem linken, seitlichen Außenrückblickspiegel 38 ist der Monitor 12 angeordnet, der sich mittels der im Zugriffsbereich des Fahrers angeordneten Bedienungseinrichtung 10 wahlweise mit der vorderen schwenkbaren Kamera 34 oder mit der rückwärtigen Kamera 36 verbinden läßt. Die schwenkbare Kamera 34 läßt sich über die Bedienungseinrichtung 10 schwenken, wodurch sich der Blickwinkel der vorderen Kamera 34 und der erfaßte Bereich ändern läßt.

Beim Rückwärtsfahren läßt sich durch entsprechendes Umschalten mittels der Bedieneinrichtung 10 das Bild der rückwärtigen Kamera 36 auf den Monitor 12 schalten, so daß im linken Außenrücksblickpiegel 38 das Blickfeld der rückwärtigen Kamera 36 dargestellt ist. Bei Bedarf kann der Fahrer dann über die Bedienungseinrichtung 10 das Blickfeld der vorderen Kamera 34 auf den Monitor 12 schalten.

Die Bild- und Datenspeichereinrichtung 4 mit Steuereinrichtung 6 ist wiederum an geeigneter Stelle im Sattelzug 32 angeordnet. Hierbei wird durch die Steuereinrichtung 6 die Aufzeichnung und Speicherung der jeweils jüngsten Vergangenheit so gesteuert, dass sowohl die Bilder der vorderen Kamera 34 als auch das Bild der rückwärtigen Kamera 36 gespeichtert werden.

Die Anordnung der Kameras 2, 34, 36 und Monitor 12 im Außenrückblickspiegel 18 bzw. 34 ist Gegenstand der bereits hinterlegten deutschen Patentanmeldung 10036875.1. Insofern wird auf die Patentanmeldung 10036875.1 vollinhaltlich bezug genommen.

### Bezugszeichenliste:

- 2: Kamera
- 4: Bild- und Datenspeichereinrichtung
- 6: Steuereinrichtung
- 8: Schnittstelleneinrichtung
- 10: Bedienungseinrichtung
- 12: Monitor
- 14: Personenkraftwagen
- 16: Innenrückblickspiegel
- 18: Außenrückblickspiegel
- 20: Spiegelgehäuse
- 22: Hauptspiegel
- 23: Spiegelscheibe von 22
- 24: Zusatzspiegel
- 25: Spiegelscheibe von 24
- 26: Haltearme
- 28: Spiegelfuß
- 30: Kameraöffnung in 20
- 32: Sattelzug
- 34: vordere, schwenkbare Kamera
- 36: rückwärtige Kamera
- 38: linker Außenrückblickspiegel

## Patentansprüche

1. Überwachungseinrichtung für Kraftfahrzeuge (14; 32), insbesondere Nutzfahrzeuge (32), mit
einer Kamera (2; 34, 36) zum Aufnehmen von Einzel- und/oder Laufbildern, wobei die Kamera (2) einen Sichtbereich in, vor, seitlich und/oder hinter dem Fahrzeug (14, 32) erfaßt, und
mit einer Bild- und Datenspeichereinrichtung (4), die mit der Kamera (2; 34, 36) verbunden ist, zum Aufzeichnen und Speichern von der Kamera (2; 34, 36) aufgenommenen Bildern, wenigstens für ein Zeitintervall zwischen einem ersten Zeitpunkt t_{**1**} in der Vergangenheit und einem zweiten Zeitpunkt t_{**2**}, der zwischen dem ersten Zeitpunkt t_{**1**} und der Gegenwart liegt.

2. Überwachungseinrichtung nach Anspruch 1, **dadurch gekennzeichnet, dass** der zweite Zeitpunkt t_{**2**} die Gegenwart ist.

3. Überwachungseinrichtung nach einem der vorhergehenden, **dadurch gekennzeichnet, dass** die Kamera (2) in einem Außenspiegel (18) angeordnet ist.

4. Überwachungseinrichtung nach einem der vorhergehenden, **dadurch gekennzeichnet, dass** die Kamera (2) im Innern des Kraftfahrzeugs (14), vorzugsweise im Bereich des Innenrückblickspiegels (16) angeordnet ist.

5. Überwachungseinrichtung nach einem der vorhergehenden Ansprüche, **dadurch gekennzeichnet, dass** in der Bild- und Datenspeichereinrichtung (4) zu den Bildern Daten, wie Fahrzeugeschwindigkeit, Temperatur, Datum, usw. aufgezeichnet werden.

6. Überwachungseinrichtung nach einem der vorhergehenden Ansprüche, **dadurch gekennzeichnet, dass** die Bild- und Datenspeichereinrichtung (4) stoß- und feuerfest ausgebildet ist.

7. Überwachungseinrichtung nach einem der vorhergehenden Ansprüche, **gekennzeichnet durch** einen Monitor (12) zur Darstellung der **durch** die Kamera (2; 34, 36) aufgenommenen Bilder.

8. Überwachungseinrichtung nach Anspruch 7, **dadurch gekennzeichnet, dass** der Monitor (12) in einem Außenspiegel (18; 38) mit Spiegelscheibe (23, 25) im Sichtbereich des Fahrers angeordnet ist.

9. Überwachungseinrichtung nach Anspruch 8, **dadurch gekennzeichnet, dass** der Monitor (12) im Bereich der Spiegelscheibe (23, 25), insbesondere im Randbereich der Spiegelscheibe (23, 25) angeordnet ist.

10. Überwachungseinrichtung nach einem der vorhergehenden Ansprüche, **dadurch gekennzeichnet, dass** die Kamera (36) schwenkbar ist.

11. Überwachungseinrichtung nach einem der vorhergehenden Ansprüche, **gekennzeichnet durch** eine Bedienungseinrichtung (10) im Bereich des Fahrers zum Schwenken und Verändern der Blickrichtung der Kamera (2; 36, 34).

12. Überwachungseinrichtung nach einem der vorhergehenden Ansprüche, **dadurch gekennzeichnet, dass** eine Mehrzahl von Kameras (34, 36) vorgesehen ist.

13. Überwachungseinrichtung nach einem der vorhergehenden Ansprüche, **dadurch gekennzeichnet, dass** eine Mehrzahl von Monitoren (12) vorgesehen ist.

14. Überwachungseinrichtung nach einem der vorhergehenden Ansprüche, **dadurch gekennzeichnet, dass** in dem wenigstens einen Monitor (12) gleichzeitig unterschiedliche Bilder darstellbar sind.
